# EUROPÄISCHE PATENTANMELDUNG

(11) **EP 4 455 623 A1**
(43) Veröffentlichungstag der Anmeldung: **30.10.2024**
(21) Anmeldenummer: 23169517.2
(22) Anmeldetag: 24.04.2023
(51) Int. Cl.: G01H 1/00, G01V 1/00, G08B 13/14

(54) **VORRICHTUNG ZUR ERKENNUNG VON VIBRATIONEN, ERSCHÜTTERUNGEN ODER BEWEGUNGEN**

(71) Anmelder: Mairotec Holding GmbH, 98694 Ilmenau (DE)
(72) Erfinder: MATHES, Andreas, 92318 Neumarkt (DE)
(74) Vertreter: Liedtke & Partner Patentanwälte

(57) **Zusammenfassung**

Die Erfindung betrifft eine Vorrichtung (1) zur Erkennung von Vibrationen, Erschütterungen oder Bewegungen, umfassend ein Gehäuse (A), wobei im Gehäuse (A) mindestens eine elektronische Schaltung, mindestens ein Energiespeicher (B1), ein Spannungsregler (B2) und ein Summer (C1) angeordnet sind, wobei der Spannungsregler (B2) zur Spannungsversorgung der elektrischen Schaltung aus dem Energiespeicher (B1) konfiguriert ist, wobei die elektrische Schaltung einen Controller (U1) sowie eine Inertialmesseinheit (U3) aufweist, wobei im Controller (U1) eine Software gespeichert ist, durch die der Controller (U1) dazu konfiguriert ist, aus von der Inertialmesseinheit (U3) gemessenen Bewegungsdaten sowie Beschleunigungsdaten bestimmte Bewegungsmuster und/oder Beschleunigungsmuster zu erkennen und bei deren Vorliegen einen Alarm über den Summer (C1) oder Push-Benachrichtigung über Wifi auszulösen.

## Beschreibung

Die Erfindung betrifft eine Vorrichtung zur Erkennung von Vibrationen, Erschütterungen oder Bewegungen.

Der Erfindung liegt die Aufgabe zu Grunde, eine neuartige Vorrichtung zur Erkennung von Vibrationen, Erschütterungen oder Bewegungen anzugeben.

Die Aufgabe wird erfindungsgemäß gelöst durch eine Vorrichtung zur Erkennung von Vibrationen, Erschütterungen oder Bewegungen gemäß Anspruch 1.

Vorteilhafte Ausgestaltungen der Erfindung sind Gegenstand der Unteransprüche.

Es wird eine Vorrichtung zur Erkennung von Vibrationen, Erschütterungen oder Bewegungen vorgeschlagen, umfassend ein Gehäuse, wobei im Gehäuse mindestens eine elektronische Schaltung, mindestens ein Energiespeicher, ein Spannungsregler und ein Summer angeordnet sind, wobei der Spannungsregler zur Spannungsversorgung der elektrischen Schaltung aus dem Energiespeicher konfiguriert ist, wobei die elektrische Schaltung einen Controller sowie eine Inertialmesseinheit aufweist, wobei im Controller eine Software gespeichert ist, durch die der Controller dazu konfiguriert ist, aus von der Inertialmesseinheit gemessenen Bewegungsdaten sowie Beschleunigungsdaten bestimmte Bewegungsmuster und/oder Beschleunigungsmuster zu erkennen und bei deren Vorliegen einen Alarm über den Summer auszulösen. Die bestimmten Bewegungsmuster und/oder Beschleunigungsmuster können typisch für Erdbeben oder seismische Aktivitäten sein. Auf diese Weise kann die Vorrichtung zur Alarmierung bei Erkennung von Erdbeben oder seismischen Aktivitäten verwendet werden.

In einer Ausführungsform weist die elektronische Schaltung mindestens eine Leiterplatte auf, auf der zumindest der Controller ist, wobei optional jedoch auch weitere Komponenten der elektronischen Schaltung auf der Leiterplatte angeordnet sein können.

In einer Ausführungsform ist der Energiespeicher als ein Akkumulator ausgebildet wobei an dem Gehäuse eine Ladebuchse, beispielsweise eine USB-Ladebuchse, insbesondere eine USB-C-Ladebuchse, angeordnet ist, die mit dem als Laderegler ausgebildeten Spannungsregler verbunden ist. In anderen Ausführungsformen kann der Energiespeicher auch als Primärelement ausgebildet sein. Insbesondere kann der Energiespeicher austauschbar sein.

In einer Ausführungsform kann ein Schalter zum Ein- und Ausschalten der Vorrichtung vorgesehen sein. Auf diese Weise verbraucht die Vorrichtung nur dann Energie, wenn sie eingeschaltet ist.

In einer Ausführungsform ist eine externe Energieversorgung mit der Ladebuchse verbunden, beispielsweise ein Solarpaneel, ein Windgenerator oder ein Steckernetzteil.

In einer Ausführungsform weist die Vorrichtung ferner einen Kommunikationsanschluss auf, über den der Controller programmierbar und/oder betreibbar ist. Der Kommunikationsanschluss, beispielsweise eine USB-Buchse, insbesondere eine Micro-USB-Buchse, kann separat von der Ladebuchse sein oder gleichzeitig als Ladebuchse ausgebildet sein.

In einer Ausführungsform weist die elektronische Schaltung ferner ein Kommunikationsmodul zur drahtlosen Kommunikation auf, beispielsweise gemäß IEEE-802.11 und/oder Bluetooth^{®}, über das die Vorrichtung steuerbar ist, über das Daten an eine App sendbar sind und/oder über das ein Alarm an einen drahtlos verbundenen Server oder ein drahtlos verbundenes Endgerät sendbar sind. Beispielsweise kann vorgesehen sein, dass anstelle der Ausgabe des Alarms über den Summer oder zusätzlich dazu eine Push-Benachrichtigung über das Kommunikationsmodul zur drahtlosen Kommunikation an eine App, einen Server und/oder ein Endgerät gesendet wird.

In einer Ausführungsform weist die elektronische Schaltung ferner ein GSM-Modul mit einer intergierten E-Sim zur Datenübertragung in einem Mobilfunknetz auf, insbesondere in Bereichen ohne Zugang zu drahtlosen Netzwerken, so dass eine Alarmauslösung auch bei Zusammenbrechen eines drahtlosen Netzwerks oder dessen Fehlen möglich ist.

In einer Ausführungsform weist die elektronische Schaltung ferner einen Crypto-Chip auf, der der Sicherheit, insbesondere Vertraulichkeit, Datenintegrität und Authentifizierung der Vorrichtung dient.

In einer Ausführungsform weist die elektronische Schaltung ferner einen Taster auf, wobei die Vorrichtung dazu konfiguriert ist, bei Betätigung des Tasters zurückgesetzt zu werden.

In einer Ausführungsform ist das Gehäuse zumindest annähernd zylindrisch ausgebildet und weist einen Grundkörper und einen Deckel auf. Auf diese Weise ähnelt die Vorrichtung einem herkömmlichen Brandmelder.

In einer Ausführungsform weist das Gehäuse Befestigungsmittel, beispielsweise Montagebohrungen oder Bajonettverbindungen zur Schnellverbindung mit einer Montageplatte, zur Befestigung an einer Decke, einer Wand oder am Boden auf.

In einer Ausführungsform ist das Gehäuse mit einem Erdspieß verbunden, sodass es im Freien auf einfache Weise installiert werden kann.

Gemäß einem Aspekt der vorliegenden Erfindung wird die Verwendung der Vorrichtung zur Erkennung von Erdbeben und/oder seismischen Aktivitäten ermöglicht, wobei die Vorrichtung in einem Gebäude oder im Freien an einer Decke, einer Wand oder am Boden befestigt wird.

Ausführungsbeispiele der Erfindung werden im Folgenden anhand von Zeichnungen näher erläutert.

Darin zeigen:
- Figur 1: eine schematische Ansicht einer Vorrichtung zur Erkennung von Erdbeben, seismischen Aktivitäten sowie anderen Vibrationen, Erschütterungen oder Bewegungen, und
- Figur 2: eine schematische Ansicht der Leiterplatte.

Einander entsprechende Teile sind in allen Figuren mit den gleichen Bezugszeichen versehen.

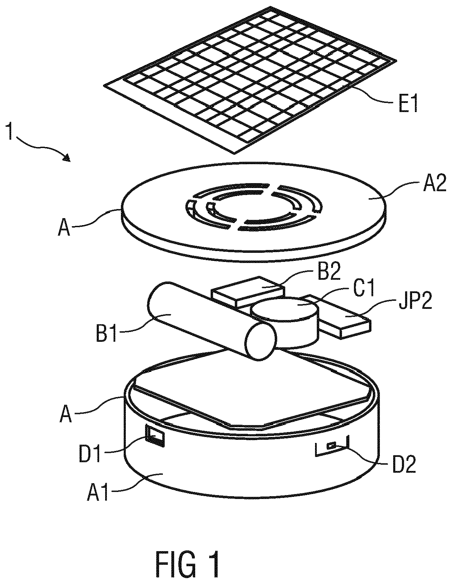

**Figur** 1 ist eine schematische Ansicht einer Vorrichtung 1 zur Erkennung von Erdbeben, seismischen Aktivitäten sowie anderen Vibrationen, Erschütterungen oder Bewegungen.

Die Vorrichtung 1 weist ein Gehäuse A auf, das beispielsweise in einem Gebäude an einer Decke, einer Wand oder am Boden befestigt werden kann. Die Vorrichtung 1 kann hinsichtlich ihres Aussehens und/oder ihrer Befestigung ähnlich einem Rauchmelder ausgebildet sein, beispielsweise mit einem zumindest annähernd zylindrischen Gehäuse A. In einer weiteren Ausführungsform kann die Vorrichtung 1 zur Montage im Freien konfiguriert sein, wobei ebenfalls eine beliebige Montage möglich ist. Beispielsweise kann die Vorrichtung 1 zur Montage am Boden auf einem festen Untergrund, beispielsweise einem Fundament, oder bodennah mit einem Erdspieß im Freien konfiguriert sein. Es können jedoch auch andere Aufstellungsorte und Befestigungen gewählt werden.

Das Gehäuse A kann einen Grundkörper A1 und einen Deckel A2 aufweisen. An dem Gehäuse A ist eine Ladebuchse D1, beispielsweise eine USB-Ladebuchse, insbesondere eine USB-C-Ladebuchse, sowie ein Schalter D2 zum Ein- und Ausschalten der Vorrichtung 1 angeordnet.

Im Gehäuse A sind mindestens eine Leiterplatte JP2, mindestens ein Energiespeicher B1, beispielsweise ein Akkumulator, ein Spannungsregler B2 und ein Summer C1 angeordnet. Die Ladebuchse D1 ist mit dem Spannungsregler B2 verbunden, der beispielsweise als ein Laderegler ausgebildet sein kann. Der Spannungsregler B2 kann zur Überwachung und Regelung einer Spannung und eines Ladeprozesses des Akkumulators B1 und/oder zur Spannungsversorgung der Leiterplatte JP2 konfiguriert sein.

Der Schalter D2 kann zur wahlweisen Unterbrechung der Spannungsversorgung konfiguriert sein.

Der Energiespeicher B1 ist mit dem Spannungsregler B2 verbunden und versorgt die Vorrichtung 1 mit Spannung, zumindest dann, wenn die Vorrichtung 1 von einer externen Energieversorgung über die Ladebuchse D1 getrennt ist.

Für die Verwendung im Außenbereich kann ein Solarpaneel E1 vorgesehen sein, das beispielsweise zur Bereitstellung einer Nennspannung von 5V konfiguriert ist und ein Kabel mit einem Stecker zur Verbindung mit der Ladebuchse D1 aufweisen kann, sodass der Energiespeicher B1 bei Verwendung im Außenbereich geladen werden kann.

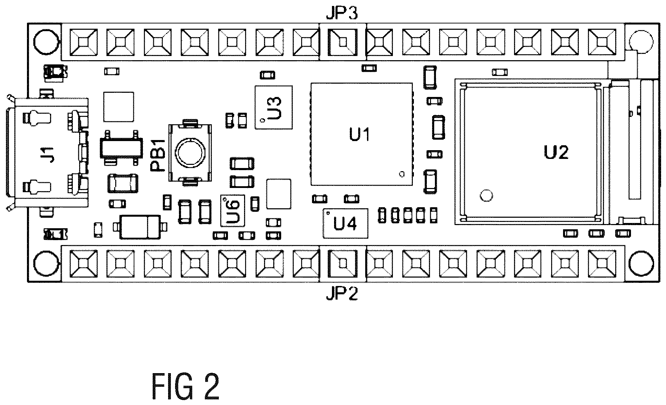

**Figur** 2 ist eine schematische Ansicht der Leiterplatte JP2.

Auf der Leiterplatte JP2 sind ein Controller U1, beispielsweise ein ATSAMD21G18A, sowie eine Inertialmesseinheit U3 (auch als IMU bezeichnet), beispielsweise ein LSM6DSOXTR, angeordnet. Im Controller U1 ist eine Software gespeichert, durch die der Controller U1 dazu konfiguriert ist, mit Hilfe der Inertialmesseinheit U3 Bewegungen in allen sechs Freiheitsgraden sowie Beschleunigungswerte zu erkennen. Der Controller U1 erhält feinste Bewegungsdaten sowie Beschleunigungsdaten von der Inertialmesseinheit U3 und ist dazu konfiguriert, diese Informationen mittels eines Algorithmus zu verarbeiten und bestimmte Bewegungsmuster und/oder Beschleunigungsmuster daraus zu erkennen, sowie bei deren Vorliegen einen Alarm über den Summer C1 auszulösen.

Die Leiterplatte JP2 kann ferner einen Kommunikationsanschluss J1, beispielsweise eine USB-Buchse, insbesondere eine Micro-USB-Buchse, aufweisen, über die der Controller U1 programmiert und/oder betrieben werden kann.

Ferner kann die Leiterplatte JP2 ein Kommunikationsmodul U2, beispielsweise NINA-W102-00B, zur drahtlosen Kommunikation aufweisen, beispielsweise gemäß IEEE-802.11 und/oder Bluetooth^{®}, über das die Vorrichtung 1 gesteuert werden kann, über das Daten an eine App gesendet werden können und/oder über das ein Alarm an einen angebundenen Server oder ein Endgerät mit entsprechender Software gesendet werden kann.

Ferner kann ein GSM-Modul mit integrierter E-Sim (nicht dargestellt) zur Datenübertragung in Bereichen ohne Zugang zu drahtlosen Netzwerken gemäß IEEE-802.11 vorgesehen sein, das zur Alarmauslösung bei Zusammenbrechen des drahtlosen Netzwerks oder dessen Fehlen über ein Mobilfunknetz konfiguriert sein kann. Über das GSM-Modul lassen sich ebenfalls Daten an entsprechende Endgeräte oder Serversysteme versenden und empfangen.

Das Solarpaneel E1 ermöglicht den autarken Betrieb der Vorrichtung 1 im Außenbereich. Alternativ können andere externe Energiequellen vorgesehen sein.

Ferner kann auf der Leiterplatte JP2 ein Crypto-Chip U4, beispielsweise ATECC608A-MAHDA-T, vorgesehen sein, der der Sicherheit, insbesondere Vertraulichkeit, Datenintegrität und Authentifizierung der Vorrichtung 1 dient. Ferner kann ein Taster PB1, beispielsweise ein IT-1185-160G-GTR, auf der Leiterplatte JP2 angeordnet sein, wobei die Vorrichtung 1 dazu konfiguriert ist, bei Betätigung des Tasters PB1 zurückgesetzt zu werden.

### BEZUGSZEICHENLISTE

- 1: Vorrichtung

- A: Gehäuse
- A1: Grundkörper
- A2: Deckel
- B1: Akkumulator, Energiespeicher
- B2: Spannungsregler
- C1: Summer
- D1: Ladebuchse
- D2: Schalter
- E1: Solarpaneel
- J1: Kommunikationsanschluss
- JP2: Leiterplatte
- JP3: evtl. ergänzen
- PB1: Taster
- U1: Controller
- U2: Kommunikationsmodul
- U3: Inertialmesseinheit
- U4: Crypto-Chip
- U6: evtl. ergänzen

## Patentansprüche

1. Vorrichtung (1) zur Erkennung von Vibrationen, Erschütterungen oder Bewegungen, umfassend ein Gehäuse (A), wobei im Gehäuse (A) mindestens eine elektronische Schaltung, mindestens ein Energiespeicher (B1), ein Spannungsregler (B2) und ein Summer (C1) angeordnet sind, wobei der Spannungsregler (B2) zur Spannungsversorgung der elektrischen Schaltung aus dem Energiespeicher (B1) konfiguriert ist, wobei die elektrische Schaltung einen Controller (U1) sowie eine Inertialmesseinheit (U3) aufweist, wobei im Controller (U1) eine Software gespeichert ist, durch die der Controller (U1) dazu konfiguriert ist, aus von der Inertialmesseinheit (U3) gemessenen Bewegungsdaten sowie Beschleunigungsdaten bestimmte Bewegungsmuster und/oder Beschleunigungsmuster zu erkennen und bei deren Vorliegen einen Alarm über den Summer (C1) auszulösen.

2. Vorrichtung (1) nach Anspruch 1, wobei die elektronische Schaltung mindestens eine Leiterplatte (JP2) aufweist, auf der zumindest der Controller (U1) angeordnet ist.

3. Vorrichtung (1) nach Anspruch 1 oder 2, wobei der Energiespeicher (B1) als ein Akkumulator ausgebildet ist, wobei an dem Gehäuse (A) eine Ladebuchse (D1) angeordnet ist, die mit dem als Laderegler ausgebildeten Spannungsregler (B2) verbunden ist.

4. Vorrichtung (1) nach einem der vorhergehenden Ansprüche, wobei ein Schalter (D2) zum Ein- und Ausschalten der Vorrichtung (1) vorgesehen ist.

5. Vorrichtung (1) nach einem der Ansprüche 3 oder 4, wobei eine externe Energieversorgung mit der Ladebuchse (D1) verbunden ist.

6. Vorrichtung (1) nach Anspruch 5, wobei die externe Energieversorgung ein Solarpaneel (E1) umfasst.

7. Vorrichtung (1) nach einem der vorhergehenden Ansprüche, ferner umfassend einen Kommunikationsanschluss (J1), über den der Controller (U1) programmierbar und/oder betreibbar ist.

8. Vorrichtung (1) nach einem der vorhergehenden Ansprüche, wobei die elektronische Schaltung ferner ein Kommunikationsmodul (U2) zur drahtlosen Kommunikation umfasst, über das die Vorrichtung (1) steuerbar ist, über das Daten an eine App sendbar sind und/oder über das ein Alarm an einen drahtlos verbundenen Server oder ein drahtlos verbundenes Endgerät sendbar sind.

9. Vorrichtung (1) nach einem der vorhergehenden Ansprüche, wobei die elektronische Schaltung ferner ein GSM-Modul mit einer integrierten E-Sim zur Datenübertragung in einem Mobilfunknetz umfasst.

10. Vorrichtung (1) nach einem der vorhergehenden Ansprüche, wobei die elektronische Schaltung ferner einen Crypto-Chip (U4) umfasst, der der Sicherheit, insbesondere Vertraulichkeit, Datenintegrität und Authentifizierung der Vorrichtung (1) dient.

11. Vorrichtung (1) nach einem der vorhergehenden Ansprüche, wobei die elektronische Schaltung ferner einen Taster (PB1) umfasst, wobei die Vorrichtung (1) dazu konfiguriert ist, bei Betätigung des Tasters (PB1) zurückgesetzt zu werden.

12. Vorrichtung (1) nach einem der vorhergehenden Ansprüche, wobei das Gehäuse (A) zumindest annähernd zylindrisch ausgebildet ist und einen Grundkörper (A1) und einen Deckel (A2) aufweist.

13. Vorrichtung (1) nach einem der vorhergehenden Ansprüche, wobei das Gehäuse (A) Befestigungsmittel zur Befestigung an einer Decke, einer Wand oder am Boden aufweist.

14. Vorrichtung (1) nach einem der vorhergehenden Ansprüche, wobei das Gehäuse (A) mit einem Erdspieß verbunden ist.

15. Verwendung der Vorrichtung (1) zur Erkennung von Erdbeben und/oder seismischen Aktivitäten, wobei die Vorrichtung (1) in einem Gebäude oder im Freien an einer Decke, einer Wand oder am Boden befestigt wird.
